# EUROPEAN PATENT APPLICATION

(11) **EP 4 845 239 A1**
(43) Date of publication of application: **25.11.2026**
(21) Application number: 24918710.5
(22) Date of filing: 18.01.2024
(51) Int. Cl.: H04W 52/02, H04W 4/70, H04W 88/04

(54) **DEVICE, WIRELESS COMMUNICATION SYSTEM, AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); OKANO, Mayuko, Tokyo 100-6150 (JP); KUMAGAI, Shinya, Tokyo 100-6150 (JP); NAGATA, Satoshi, Tokyo 100-6150 (JP); SUN, Weiqi, Beijing, 100190, (CN)
(74) Representative: Hoffmann Eitle
(86) International application number: PCT/JP2024/001341
(87) International publication number: WO 2025/154243

(57) **Abstract**

A first device of the present invention has a lower complexity than a narrow band Internet of Things (NB-IoT) device and comprises: a reception unit that receives a signal requesting wakeup; and a control unit that performs wake-up on the basis of the signal and controls reception of first information in the reception unit.

## Description

### Technical Field

The present disclosure relates to a device, a radio communication system, and a communication method.

### Background Art

In New Radio (NR) (also referred to as "5G") that is a successor system of Long Term Evolution (LTE), a technology that satisfies a large-capacity system, a high data transmission speed, low latency, simultaneous connection of a large number of terminals, low cost, low power consumption, and the like as a requirement condition has been discussed (for example, see Non-Patent Literature (hereinafter, referred to as "NPL") 1).

Further, in Release 18 (Rel-18) of 3GPP (registered trademark), Ambient Internet of Things (A-IoT) has been studied (for example, see NPL 2). In A-IoT, the target is a device having an extremely simple configuration for a low-end IoT application that operates with extremely low power consumption.

### Citation List

### Non-Patent Literature

NPL 1
   3GPP TS 38.300 V17.3.0 (2022-12)
NPL 2
   "Revised SID on Ambient IoT", RP-232404, 3GPP TSG RAN Meeting #101, September 2023
NPL 3
   "Summary for RAN Rel-19 Package: RAN1/2/3-led", RP-232745, 3GPP RAN #102, December 2023
NPL 4
   "Study on solutions for Ambient IoT (Internet of Things) in NR", RP-234058, 3GPP TSG RAN Meeting #102, December 2023
NPL 5
   3GPP TS 36.211 V16.8.0 (2023-09)
NPL 6
   3GPP TR 38.848 V1.0.0 (2023-09)

### Summary of Invention

There is room for consideration regarding a communication flow in a communication system of A-IoT including an ambient IoT device.

An aspect of the present disclosure provides a device, a radio communication system, and a communication method each capable of performing communication in an appropriate flow in a communication system of A-IoT including an ambient IoT device.

A device according to an aspect of the present disclosure is a first device having a lower complexity than a narrow band-internet of things (NB-IoT) device, and the device includes: a reception section that receives a signal requesting wake-up; and a control section that performs the wake-up based on the signal and controls reception of first information in the reception section.

### Brief Description of Drawings

[FIG. 1] FIG. 1 is a diagram illustrating an example of a radio communication system according to an embodiment of the present disclosure.
[FIG. 2] FIG. 2 is a diagram for describing Topology 1.
[FIG. 3] FIG. 3 is a diagram for describing Topology 2.
[FIG. 4] FIG. 4 is a diagram for describing Topology 3 with DL assistance.
[FIG. 5] FIG. 5 is a diagram for describing Topology 3 with UL assistance.
[FIG. 6] FIG. 6 is a diagram for describing Topology 4.
[FIG. 7] FIG. 7 is a diagram illustrating an example of an interaction between a network and an A-IoT device according to the embodiment of the present disclosure.
[FIG. 8] FIG. 8 is a diagram illustrating an example of a case of DT in Topology 1.
[FIG. 9] FIG. 9 is a diagram illustrating an example of Topology 1 and a case of DO-DTT.
[FIG. 10] FIG. 10 is a diagram illustrating an example of a case of DT in Topology 2.
[FIG. 11] FIG. 11 is a diagram illustrating a first variation of the case of DT in Topology 2.
[FIG. 12] FIG. 12 is a diagram illustrating a second variation of the case of DT in Topology 2.
[FIG. 13] FIG. 13 is a diagram illustrating an example of a case of DO-DTT in Topology 2.
[FIG. 14] FIG. 14 is a block diagram illustrating an example of a configuration of a base station according to the embodiment of the present disclosure.
[FIG. 15] FIG. 15 is a block diagram illustrating an example of a configuration of a device according to the embodiment of the present disclosure.
[FIG. 16] FIG. 16 is a block diagram illustrating an example of a configuration of an intermediate node according to the embodiment of the present disclosure.
[FIG. 17] FIG. 17 is a diagram illustrating an example of a hardware configuration of the base station, the device, and the intermediate node according to the embodiment of the present disclosure.
[FIG. 18] FIG. 18 is a diagram illustrating an example of a configuration of a vehicle according to the embodiment of the present disclosure.

### Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.

Existing techniques are used as appropriate for operations of a radio communication system according to an embodiment of the present disclosure. The existing techniques include, for example, existing LTE or NR, but are not limited to existing LTE or NR. Further, the term "LTE" used in this specification has a broad meaning including LTE-Advanced and a system after LTE-Advanced, unless otherwise specified.

Terms used in existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal is used in NR, it is not necessarily explicitly referred to as "NR-".

Further, in an embodiment of the present disclosure, a duplex system may be a Time Division Duplex (TDD) system, a Frequency Division Duplex (FDD) system, or another system (e.g., Flexible Duplex or the like).

Furthermore, in an embodiment of the present disclosure, the term "configured" with respect to a radio parameter or the like may refer to a predetermined value being preconfigured, or it may refer to a radio parameter indicated from a base station, a device, or the like being configured.

### (Embodiment)

### <Radio Communication System>

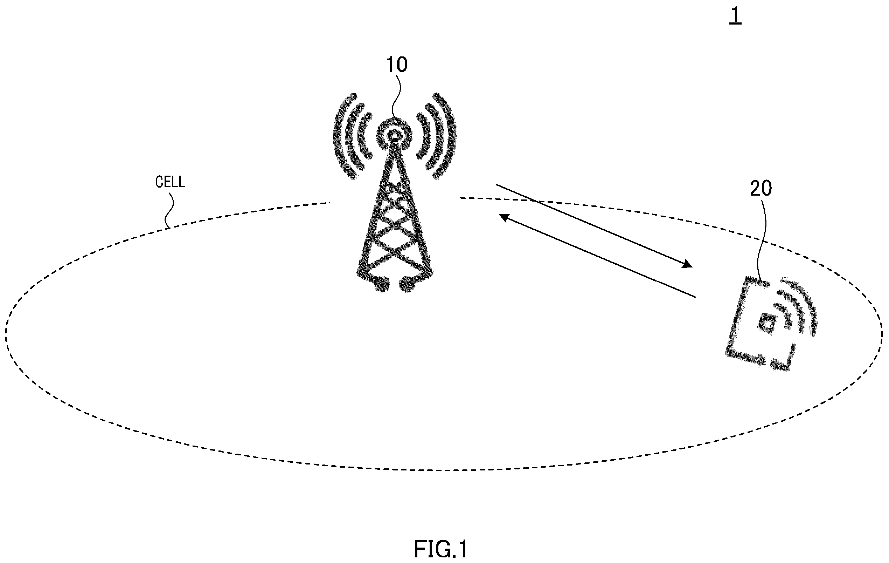

FIG. 1 is a diagram illustrating an example of a radio communication system according to the embodiment of the present disclosure. As illustrated in FIG. 1, radio communication system 1 includes base station 10 and device 20. FIG. 1 illustrates one base station 10 and one device 20, but this is an example, and a plurality of base stations and devices may be present. Device 20 may be regarded as a form of a terminal (user equipment (UE)) and may be an ambient IoT device that has a lower complexity than an NB-IoT device. The ambient IoT device may be referred to as an ambient IoT terminal, ambient IoT UE, A-IoT UE ,or the like.

Base station 10 is a communication apparatus that provides one or more cells and performs radio communication with device 20. Physical resources of the radio signal are defined in a time domain and a frequency domain. The time domain may be defined by the number of orthogonal frequency division multiplexing (OFDM) symbols. The frequency domain may be defined by the number of subcarriers or the number of resource blocks.

Base station 10 transmits downlink (DL) signals such as control information, configuration information, and data to device 20 in DL. Base station 10 receives uplink (UL) signals such as control information, information on the processing capability of device 20 (capability (information) or device capability (information); for example, capability, device capability, A-IoT capability, A-IoT device capability, and the like), and data from device 20 in UL.

Channels used for transmission of DL signals include, for example, a data channel and a control channel. For example, the data channel may include a physical downlink shared channel (PDSCH), and the control channel may include a physical downlink control channel (PDCCH). For example, base station 10 transmits control information to device 20 using the PDCCH and transmits a DL data signal to device 20 using the PDSCH. Note that the PDSCH is an example of a downlink shared channel or a data channel, and the PDCCH is an example of a downlink control channel. The PDCCH may be read as downlink control information (DCI), control information, or the like transmitted in the PDCCH.

As will be described later, the radio communication system may include an intermediate node, an assisting node, and/or a terminal (UE) (see <Device Type and Topology> below). Note that, in the following, "and/or" may be simply referred to as "/" in some cases.

Device 20 is a communication apparatus equipped with a radio communication function and may be an ambient IoT device (for example, a sensor) as described above.

Device 20 receives a DL signal such as a control signal, configuration information, data, and the like from base station 10 in DL and transmits a UL signal such as a control signal, capability information of device 20, data, and the like to base station 10 in UL.

Channels used for transmission of UL signals include, for example, a data channel and a control channel. For example, the data channel may include a physical uplink shared channel (PUSCH), and the control channel may include a physical uplink control channel (PUCCH). For example, device 20 transmits control information using the PUCCH and transmits a UL data signal using the PUSCH. Note that the PUSCH is an example of an uplink shared channel or a data channel, and the PUCCH is an example of an uplink control channel. The PUSCH or the PUCCH may be read as uplink control information (UCI), control information, or the like transmitted in the PUSCH or the PUCCH.

### <Ambient IoT>

In Rel-18, studies on ambient IoT that is even lower end than existing NB-IoT (see, for example, section 10 of NPL 5) have been approved (see, for example, NPL 2). In ambient IoT, an ultra-low complexity device with ultra-low power consumption is targeted.

In ambient IoT, for example, the following introduction scenarios and characteristics may be studied for related use cases.
- Indoor or outdoor environment
- Base station type, for example, macro/micro/pico cell-based deployment
- Topology related to connectivity, for example, which node among a base station, a terminal (UE), a relay, a repeater, and the like communicates with the A-IoT device
- Whether a duplex system is TDD or FDD, and whether a frequency band is a licensed band or an unlicensed band
- Coexistence with UE and network equipment in frequency band for the existing 3GPP technology
- Assumption of traffic of outgoing call from device and incoming call to device

Based on the above introduction scenarios and characteristics, for example, the following RAN design targets may be established.
- Power consumption
- Complexity
- Coverage
- Data rate
- Positioning accuracy

Based on the introduction scenarios suitable for the related use case, the feasibility of satisfying the design target is compared and evaluated, and a function to be supported is specified.

### <Device Type and Topology>

Based on the results of the study items, TR 38.848 (NPL 6) has been approved. In TR 38.848, ambient IoT devices of the following categories are studied.

Device A: Device A has no power storage (energy storage), has no function of independent signal generation and signal amplification, and performs backscattering transmission.

Device B: Device B has power storage, has no function of independent signal generation, and performs backscattering transmission. Device B amplifies a reflected signal using stored power.

Device C: Device C has power storage, has an independent signal generation function, and has an active radio frequency (RF) component for transmission.

Note that the complexity of Device A is assumed to be on the order of radio frequency identification (RFID).

In TR 38.848, the following Topologies 1 to 4 are defined in an ambient IoT network.

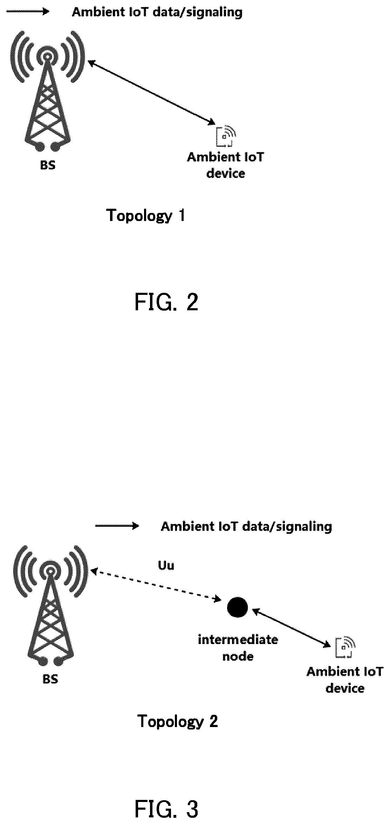

FIG. 2 is a diagram illustrating Topology 1. As illustrated in FIG. 2, Topology 1 is a configuration in which a base station (BS) and an ambient IoT device communicate with each other. The ambient IoT device directly performs bidirectional communication with the base station.

FIG. 3 is a diagram illustrating Topology 2. As illustrated in FIG. 3, Topology 2 is a configuration in which a base station and an ambient IoT device communicate with each other via an intermediate node. The ambient IoT device performs bidirectional communication with the intermediate node disposed between the base station and the ambient IoT device. The intermediate node may be, for example, a relay, an integrated access and backhaul (IAB) node, UE, a repeater, or the like.

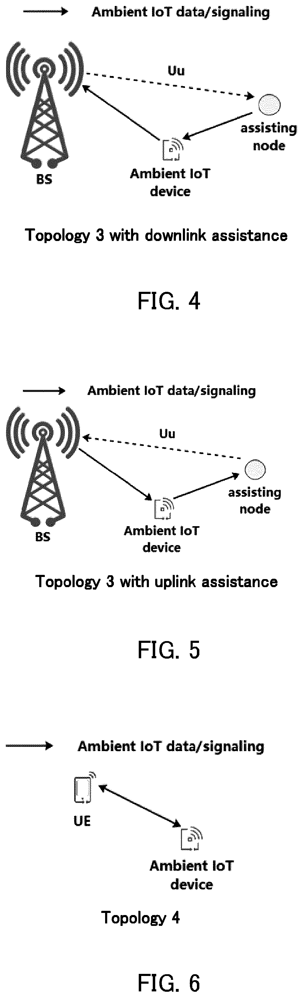

FIG. 4 is a diagram illustrating Topology 3 with DL assistance. As illustrated in FIG. 4, Topology 3 is a configuration including communication between a base station and an assisting node, communication between the assisting node and an ambient IoT device, and communication between the ambient IoT device and the base station.

The assisting node assists in DL communication. For example, as illustrated in FIG. 4, the assisting node receives a DL signal from the base station and transmits the received DL signal to the ambient IoT device. As for UL communication, the ambient IoT device directly transmits a UL signal to the base station.

FIG. 5 is a diagram illustrating Topology 3 with UL assistance. As illustrated in FIG. 5, Topology 3 is a configuration including communication between a base station and an assisting node, communication between the assisting node and an ambient IoT device, and communication between the ambient IoT device and the base station.

The assisting node assists in UL communication. For example, as illustrated in FIG. 5, the assisting node receives a UL signal from the ambient IoT device and transmits the received UL signal to the base station. As for DL communication, the ambient IoT device directly receives a DL signal from the base station.

The assisting node illustrated in FIGS. 4 and 5 may be, for example, a relay, an IAB node, UE, a repeater, or the like.

FIG. 6 is a diagram illustrating Topology 4. Topology 4 is a configuration in which UE and an ambient IoT device communicate with each other. The ambient IoT device performs bidirectional communication with the UE. The communication according to Topology 4 may be regarded as sidelink (SL) communication.

In Topologies 1 to 4 described above, the ambient IoT device may be provided with a carrier wave from another node inside or outside the topology (see section 4.2.1 of NPL 6).

Radio communication system 1 (radio communication network) may include a base station, an assisting node, an intermediate node, and/or a terminal (UE in Topology 4) in addition to device 20. In the present specification, the base station, the assisting node, the intermediate node, and the terminal may be replaced with a network or a (network) node. Further, the A-IoT device may be simply referred to as A-IoT.

### <Backscattering Transmission>

The base station, the intermediate node, the assisting node, and another node transmit an RF signal to the ambient IoT device. The ambient IoT device is activated and obtains power from an RF operating field from the base station, the intermediate node, the assisting node, and another node via inductive coupling.

The ambient IoT device modulates, in a backscattering manner, the RF signal received from the base station, the intermediate node, the assisting node, and another node by switching a reflection coefficient of an antenna of its own device, and transmits information to the base station, the intermediate node, the assisting node, and another node.

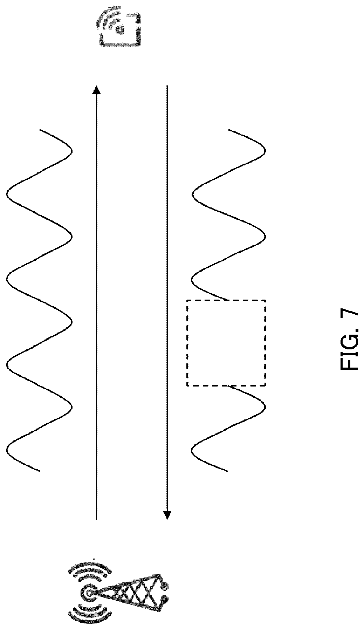

FIG. 7 is a diagram illustrating backscattering transmission. FIG. 7 illustrates an example in which the ambient IoT device performs ON-OFF keying to transmit information. A region surrounded by a broken line illustrated in FIG. 7 indicates an OFF interval and may correspond to "0" of the information (bit). A signal of a sine wave may correspond to "1" of the information.

Hereinafter, the network may include a base station, an assisting node, an intermediate node, and a terminal (UE of Topology 4). Hereinafter, the base station, the assisting node, the intermediate node, the relay, and the terminal may be referred to as a network node. Ambient IoT may be referred to as A-IoT.

A-IoT as described above is mentioned as a topic of 3GPP Rel-19. The following matters are being considered as A-IoT. In the following, the ambient IoT device is assumed to be ambient IoT UE, and the ambient IoT UE is referred to as A-IoT UE. In addition, in the following description, the base station may be replaced with other expressions such as BS and gNB.

### <Traffic Flow>

The following DT and DO-DTT are being considered as the traffic flow of A-IoT.
· Device Terminated (DT): There is no transmission from the A-IoT UE as traffic, and there is information to be transmitted to the A-IoT UE. For example, DT corresponds to a command type in which an instruction (for example, an order or a command) to the A-IoT UE is present.
· Device Originated-Device Terminated Triggered (DO-DTT): There is a trigger from a network (NW, for example, a base station) as traffic. In addition, there is transmission of information from the A-IoT UE as traffic. In addition, for example, DO-DTT may have transmission of information to the A-IoT UE as traffic. For example, DO-DTT corresponds to a sensor information report type that collects sensor information from the A-IoT UE.

In the present embodiment, the transmission of information corresponds to the transmission of a signal including information or the transmission of a signal. In the present embodiment, the transmission to a certain device X corresponds to the transmission of a signal (or information) to device X. In addition, the transmission from a certain device X and the transmission of a certain device X correspond to the transmission of a signal (or information) by device X. In addition, the reception from a certain device X corresponds to the reception of a signal (or information) transmitted by device X. In addition, the reception of a certain device X corresponds to the reception of a signal (or information) by device X.

### <Device Assumption>

The device such as the A-IoT UE may have the following assumptions.
· Transmission (TX) is backscattering uplink (UL) transmission without an amplifier or general UL transmission with an amplifier. Alternatively, backscattering UL transmission with an amplifier may be performed.
· Frequency range (FR) 1-FDD is applied. That is, the A-IoT UE can switch the carrier frequency between the carrier of the downlink (DL) and the carrier of the uplink (UL). Note that the present embodiment is not limited to FR1-FDD, and may be applied to TDD, FR2, or FR3.

Note that the frequency band of each FR is, for example, as follows.
· FR1: 410 MHz to 7.125 GHz
· FR2: 24.25 GHz to 52.6 GHz
· FR3: 7.125 GHz to 24.25 GHz

In the FR1, a sub-carrier spacing (SCS) of 15 kHz, 30 kHz, or 60 kHz is used, and a bandwidth (BW) of 5 to 100 MHz may be used. FR2 is a higher frequency than FR1, and an SCS of 60 kHz or 120 kHz (240 kHz may be included) is used, and a bandwidth (BW) of 50 to 400 MHz may be used.

### <Topology>

Among the topologies illustrated in FIGS. 2 to 6, Topology 1 and Topology 2 are focused on.

In Topology 1, communication of UL and/or DL is performed between the base station and the A-IoT UE. The base station in the case of Topology 1 may support a microcell.

In Topology 2, the base station and the A-IoT UE communicate with each other via an intermediate node. The A-IoT UE performs bidirectional communication with the intermediate node disposed between the base station and the A-IoT UE. Hereinafter, the intermediate node is referred to as int. UE. The case of Topology 2 may be applied to an indoor case. The base station in the case of Topology 2 may support a macrocell.

The signal design for the A-IoT UE may be common between the above-described Topology 1 and Topology 2.

### <Consideration items>

In A-IoT, the traffic flow including DT and DO-DTT and the topology including Topology 1 and Topology 2 have been considered as described above, but the communication flow of A-IoT corresponding to the traffic flow and the topology is unclear, and there is room for consideration.

For example, in a case where the communication flow is unclear, there is a possibility that the radio communication system of A-IoT may not be able to operate appropriately. For example, in a case where communication is performed between the base station and the A-IoT UE as in Topology 1 and an appropriate processing procedure corresponding to the traffic flow is not applied, the A-IoT UE may not be able to acquire appropriate information from the base station and may not be able to perform a proper operation. In addition, for example, in a case where communication is performed between the base station and the A-IoT UE via the int. UE as in Topology 2 and an appropriate processing procedure corresponding to the traffic flow is not applied, the A-IoT UE may not be able to acquire appropriate information from the base station or the int. UE and may not be able to perform a proper operation. In addition, in a case where the A-IoT UE transmits information as in DO-DTT and the method of transmission is not defined, there is a possibility that the A-IoT UE may not be able to transmit the information appropriately. In this case, there is a possibility that the operation of collecting information using the A-IoT UE may not be performed appropriately.

Therefore, in the present embodiment, an example of an appropriate communication flow for each combination of the topology and the traffic will be described. Hereinafter, each of a case of DT in Topology 1, a case of DO-DTT in Topology 1, a case of DT in Topology 2, and a case of DO-DTT in Topology 2 will be described as the combination of the topology and the traffic.

### <1. Case of DT in Topology 1>

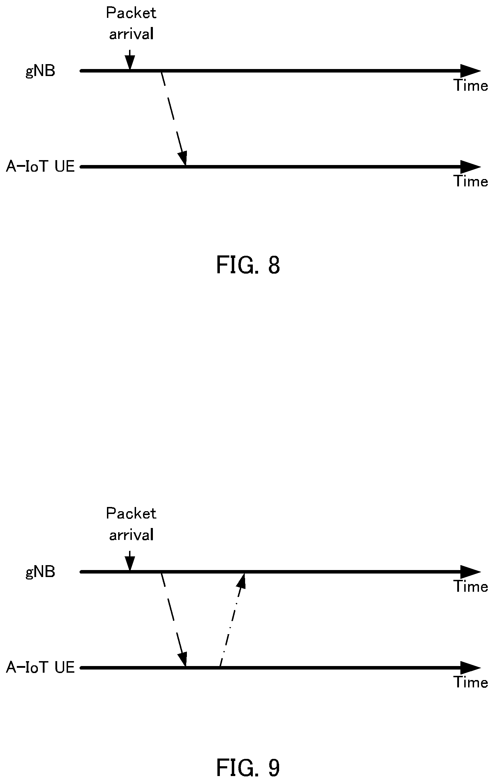

FIG. 8 is a diagram illustrating an example of the case of DT in Topology 1. FIG. 8 illustrates a signal flow between the base station (gNB) and the A-IoT UE. Note that, since the case of DT in Topology 1 is applied, there is information transmission from the base station to the A-IoT UE, but there is no information transmission from the A-IoT UE to the base station.

In the case of DT in Topology 1, the following two steps of communication flow are assumed. Note that step 1 is started, for example, in a case where a packet arrives at the base station.
· Step 1: The A-IoT UE performs wake-up.
· Step 2: The A-IoT UE receives information from the base station. In other words, the base station transmits information to the A-IoT UE.

Note that step 1 and step 2 may be performed together, for example, with the same signal.

In step 1, the A-IoT UE may perform wake-up by a signal transmitted from the base station. The signal transmitted from the base station may be referred to as a carrier waveform. Here, the signal transmitted from the base station may correspond to an energy source that supplies energy to the A-IoT UE. Note that, in the present embodiment, the carrier waveform may be replaced with a carrier wave.

In addition, in step 1, the A-IoT UE may perform wake-up by a signal other than the carrier waveform signal transmitted from the base station (for example, a radio frequency signal (RF signal)). Here, the signal other than the carrier waveform signal transmitted from the base station may correspond to an energy source that supplies energy to the A-IoT UE. Alternatively, in step 1, the A-IoT UE may perform wake-up by a signal (for example, a radio frequency signal (RF signal)) transmitted from a source other than the base station. Here, the signal transmitted from a source other than the base station may correspond to an energy source that supplies energy to the A-IoT UE.

In step 1, the signal received by the A-IoT UE may be an example of a signal requesting wake-up.

In step 1 and step 2 described above, in a case where a signal is transmitted from the base station, the transmission method of the signal transmitted from the base station may be any of the following 1a to 1c.

(1a) The signal transmitted from the base station may be broadcast to any one or more A-IoT UEs. In this case, it is not necessary to distinguish whether the transmission from the base station is directed at a single UE or at a UE group including one or more UEs. That is, a certain A-IoT UE (for example, referred to as A-IoT UE#1) that has received the signal need not detect whether the received signal is addressed to the A-IoT UE#1 or a group to which the A-IoT UE#1 belongs.

(1b) The signal transmitted from the base station may be multicast to a group including one or more A-IoT UEs. In this case, a certain A-IoT UE (for example, referred to as A-IoT UE#1) detects whether the received signal is transmitted to the group to which the A-IoT UE#1 belongs. For example, the A-IoT UE#1 detects whether the signal is transmitted to the group to which the A-IoT UE#1 belongs based on information (for example, cyclic redundancy check (CRC)) included in the signal and/or resources (for example, at least one of time, frequency, and code) used for the signal.

(1c) The signal transmitted from the base station is unicast to a single A-IoT UE. In this case, a certain A-IoT UE (for example, referred to as A-IoT UE#1) detects whether the received signal is transmitted to the A-IoT UE#1. For example, the A-IoT UE#1 detects whether the signal is transmitted to the A-IoT UE#1 based on information (for example, cyclic redundancy check (CRC)) included in the signal and/or resources (for example, at least one of time, frequency, and code) used for the signal.

Note that the A-IoT UE may indicate a capability indicating whether to support reception for at least one of the transmissions 1a to 1c described above.

Note that, in step 1 and step 2 described above, the transmission method of the signal from the base station may be different. For example, in step 1, the signal for waking up the A-IoT UE may be broadcast to any one or more A-IoT UEs as in 1a, and in step 2, the signal for transmitting information to the A-IoT UE may be multicast as in 1b or unicast as in 1c.

Note that step 1 and step 2 described above may be temporally continuous, or an interval may be provided between step 1 and step 2. For example, a signal for wake-up and a signal including information to be transmitted to the A-IoT may be temporally continuous.

The communication flow in the case of DT in Topology 1 has been described above. With this flow, the radio communication system of the A-IoT can operate appropriately. For example, in a case where communication is performed between the base station and the A-IoT UE as in Topology 1, an appropriate processing procedure according to the flow of the traffic of the DT is applied, so that the A-IoT UE can acquire appropriate information from the base station and perform a proper operation.

Note that, in step 1 and/or step 2 of the above-described example, the base station may perform transmission a plurality of times for the A-IoT, or may perform transmission individually for each of two or more A-IoTs.

### <2. Case of DO-DTT in Topology 1>

FIG. 9 is a diagram illustrating an example of a case of Topology 1 and DO-DTT. FIG. 9 illustrates a flow of signals between the base station (gNB) and the A-IoT UE. Note that, since the case of DO-DTT in Topology 1 is assumed, there is information transmission from the base station to the A-IoT UE and information transmission from the A-IoT UE to the base station.

In the case of DO-DTT in Topology 1, the following three steps of a communication flow are assumed. Note that step 1 is started, for example, in a case where a packet arrives at the base station.
· Step 1: The A-IoT UE performs wake-up.
· Step 2: The A-IoT UE receives information from the base station. In other words, the base station transmits information to the A-IoT UE.
· Step 3: The A-IoT UE transmits a signal to the base station. In other words, the base station receives a signal from the A-IoT UE.

Note that step 1 and step 2 may be performed together, for example, with the same signal. Further, the signal in step 2 may be a carrier waveform signal.

In step 1, the A-IoT UE may perform wake-up by a signal transmitted from the base station. The signal transmitted from the base station may be referred to as a carrier waveform. Here, the signal transmitted from the base station may correspond to an energy source that supplies energy to the A-IoT UE.

In addition, in step 1, the A-IoT UE may perform wake-up by a signal other than the carrier waveform signal transmitted from the base station (for example, a radio frequency signal (RF signal)). Here, the signal other than the carrier waveform signal transmitted from the base station may correspond to an energy source that supplies energy to the A-IoT UE. Alternatively, in step 1, the A-IoT UE may perform wake-up by a signal (for example, a radio frequency signal (RF signal)) transmitted from a source other than the base station. Here, the signal transmitted from a source other than the base station may correspond to an energy source that supplies energy to the A-IoT UE.

In step 1, the signal received by the A-IoT UE may be an example of a signal requesting wake-up.

In step 1 and step 2 described above, in a case where a signal is transmitted from the base station, the signal transmitted from the base station may be any of the following 2a to 2c.

(2a) The signal transmitted from the base station may be broadcast to any one or more A-IoT UEs. In this case, it is not necessary to distinguish whether the transmission from the base station is directed at a single UE or at a UE group including one or more UEs. That is, a certain A-IoT UE (for example, referred to as A-IoT UE#1) that has received the signal need not detect whether the received signal is addressed to the A-IoT UE#1 or a group to which the A-IoT UE#1 belongs.

(2b) The signal transmitted from the base station may be multicast to a group including one or more A-IoT UEs. In this case, a certain A-IoT UE (for example, referred to as A-IoT UE#1) detects whether the received signal is transmitted to the group to which the A-IoT UE#1 belongs. For example, the A-IoT UE#1 detects whether the signal is transmitted to the group to which the A-IoT UE#1 belongs based on information (for example, cyclic redundancy check (CRC)) included in the signal and/or resources (for example, at least one of time, frequency, and code) used for the signal.

(2c) The signal transmitted from the base station is unicast to a single A-IoT UE. In this case, a certain A-IoT UE (for example, referred to as A-IoT UE#1) detects whether the received signal is transmitted to the A-IoT UE#1. For example, the A-IoT UE#1 detects whether the signal is transmitted to the A-IoT UE#1 based on information (for example, cyclic redundancy check (CRC)) included in the signal and/or resources (for example, at least one of time, frequency, and code) used for the signal.

Note that the A-IoT UE may indicate a capability indicating whether to support reception for at least one of the transmissions 2a to 2c described above.

Note that, in step 1 and step 2 described above, the transmission method of the signal from the base station may be different. For example, in step 1, the signal for waking up the A-IoT UE may be broadcast to any one or more A-IoT UEs as in 2a, and in step 2, the signal for transmitting information to the A-IoT UE may be multicast as in 2b or unicast as in 2c.

Note that step 1 and step 2 described above may be temporally continuous, or an interval may be provided between step 1 and step 2. For example, a signal for wake-up and a signal including information to be transmitted to the A-IoT may be temporally continuous.

In step 3 described above, the transmission method of the signal in a case of transmitting the signal from the A-IoT UE to the base station may be either of the following 2d and 2e.

(2d) The transmission in step 3 may be a backscattering UL transmission. In this case, timing adjustment (for example, timing advance) between DL reception and UL transmission may or may not be applied. Further, power adjustment (for example, a power amplifier) may or may not be applied. Further, transmission timing adjustment may or may not be applied.

(2e) The transmission in step 3 may be a UL transmission that is not backscattering. The UL transmission that is not backscattering may be a general UL transmission. For example, a UL channel (for example, PUCCH, PUSCH, PRACH, and the like) and/or a UL reference signal (for example, a sounding reference signal (SRS), a sequence-based signal, and the like) is generated and transmitted. In this case, timing adjustment between DL reception and UL transmission may or may not be applied. Further, power adjustment may be applied.

The communication flow in the case of DO-DTT in Topology 1 has been described above. With this flow, the radio communication system of the A-IoT can operate appropriately. For example, in a case where communication is performed between the base station and the A-IoT UE as in Topology 1, an appropriate processing procedure according to the flow of traffic of DO-DTT is applied, so that the A-IoT UE can acquire appropriate information from the base station and can perform a proper operation. Further, in a case where the A-IoT UE transmits information as in DO-DTT, the A-IoT UE can transmit the information appropriately.

Note that, in the above-described example (for example, FIG. 9), the transmission from the base station to the A-IoT UE and the transmission from the A-IoT UE to the base station are each performed once, but the present disclosure is not limited thereto. For example, the transmission from the base station to the A-IoT UE may be performed a plurality of times, and then the transmission from the A-IoT UE to the base station may be performed once. In this case, the one transmission from the A-IoT UE to the base station may include responses to the plurality of transmissions from the base station to the A-IoT UE.

### <3. Case of DT in Topology 2>

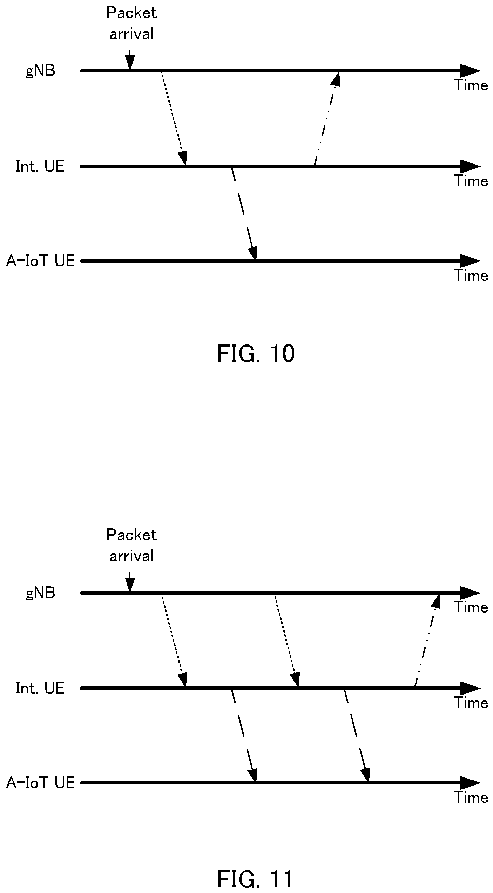

FIG. 10 is a diagram illustrating an example of a case of DT in Topology 2. FIG. 10 illustrates a flow of signals between a base station (gNB), an int. UE, and an A-IoT UE. Note that, since it is a case of DT in Topology 2, there is information transmission to the A-IoT UE, but there is no information transmission from the A-IoT UE.

In the case of DT in Topology 2, the following four-step communication flow is assumed. Note that step 0 is started, for example, when a packet arrives at the base station.
· Step 0: The int. UE receives a trigger for transmitting a signal to the A-IoT UE from the base station and transmits the signal to the A-IoT UE based on the trigger. Step 0 includes an operation in which the base station transmits the trigger to the int. UE.
· Step 1: The A-IoT UE performs wake-up.
· Step 2: The A-IoT UE receives information from the int. UE. In other words, the int. UE transmits the information to the A-IoT UE.
· Step X: The int. UE transmits a signal to the base station.

Note that step 1 and step 2 may be performed together, for example, with the same signal.

Note that, among the four steps, step 0 to step 2 may be performed in this order. Step X is not limited to an example performed after step 2. The timing at which step X is performed will be described later.

Note that step 0 may be performed without receiving a trigger for transmitting a signal to the A-IoT UE. For example, the int. UE transmits a signal to the A-IoT UE without receiving a trigger. For example, the int. UE transmits a signal to the A-IoT UE periodically or in a predetermined resource.

In step 1, the A-IoT UE may perform wake-up by a signal transmitted from the int. UE. The signal transmitted from the int. UE may be referred to as a carrier waveform. Here, the signal transmitted from the int. UE may correspond to an energy source that supplies energy to the A-IoT UE.

In addition, in step 1, the A-IoT UE may perform wake-up by a signal other than the carrier waveform signal (for example, a radio frequency signal (RF signal)) transmitted from the int. UE. Here, the signal other than the carrier waveform signal transmitted from the int. UE may correspond to an energy source that supplies energy to the A-IoT UE. Alternatively, in step 1, the A-IoT UE may perform wake-up by a signal (for example, a radio frequency signal (RF signal)) transmitted from a source other than the int. UE. Here, the signal transmitted from a source other than the int. UE may correspond to an energy source that supplies energy to the A-IoT UE.

In step 1, the signal received by the A-IoT UE may be an example of a signal requesting wake-up.

In step 1 and step 2 described above, in a case where a signal is transmitted from the int. UE, the transmission method of the signal transmitted from the int. UE may be any of the following 3a to 3c.

(3a) The signal transmitted from the int. UE may be broadcast to any one or more A-IoT UEs. In this case, it is not necessary to distinguish whether the transmission from the int. UE is directed at a single UE or at a UE group including one or more UEs. That is, a certain A-IoT UE (for example, referred to as A-IoT UE#1) that has received the signal need not detect whether the received signal is addressed to the A-IoT UE#1 or a group to which the A-IoT UE#1 belongs.

(3b) The signal transmitted from the int. UE may be multicast to a group including one or more A-IoT UEs. In this case, a certain A-IoT UE (for example, referred to as A-IoT UE#1) detects whether the received signal is transmitted to the group to which the A-IoT UE#1 belongs. For example, the A-IoT UE#1 detects whether the signal is transmitted to the group to which the A-IoT UE#1 belongs based on information (for example, cyclic redundancy check (CRC)) included in the signal and/or resources (for example, at least one of time, frequency, and code) used for the signal.

(3c) The signal transmitted from the int. UE is unicast to a single A-IoT UE. In this case, a certain A-IoT UE (for example, referred to as A-IoT UE#1) detects whether the received signal is transmitted to the A-IoT UE#1. For example, the A-IoT UE#1 detects whether the signal is transmitted to the A-IoT UE#1 based on information (for example, cyclic redundancy check (CRC)) included in the signal and/or resources (for example, at least one of time, frequency, and code) used for the signal.

Note that the A-IoT UE may indicate a capability indicating whether to support reception for at least one of the transmissions 3a to 3c described above.

Note that, in the above-described step 1 and step 2, the transmission method of the signal from the int. UE may be different. For example, in step 1, the signal for waking up the A-IoT UE may be broadcast to any one or more A-IoT UEs as in 3a, and in step 2, the signal for transmitting information to the A-IoT UE may be multicast as in 3b or unicast as in 3c.

Note that step 1 and step 2 described above may be temporally continuous, or an interval may be provided between step 1 and step 2. For example, a signal for wake-up and a signal including information to be transmitted to the A-IoT may be temporally continuous.

The timing at which step X is performed may be any of the following 3d to 3f.

(3d) Step X is performed before step 2. That is, the int. UE transmits a signal to the base station before the A-IoT UE receives information. In other words, the int. UE transmits a signal to the base station before the int. UE transmits information to the A-IoT UE. In this case, the signal transmitted to the base station may include a report indicating that the reception of the trigger has succeeded.

(3e) Step X is performed after step 2. That is, the int. UE transmits a signal to the base station after the A-IoT UE receives information. In other words, the int. UE transmits a signal to the base station after the int. UE transmits information to the A-IoT UE. In this case, the signal transmitted to the base station includes a report indicating whether the transmission to the A-IoT UE has been completed or has failed. Note that, here, whether the transmission to the A-IoT UE has been completed or has failed may correspond to whether the int. UE has been able to perform the transmission or has not been able to perform the transmission. Note that, in this case, the signal transmitted to the base station may include a report indicating that the reception of the trigger has succeeded.

(3f) Step X is performed before step 0. That is, the int. UE transmits a signal to the base station before the int. UE receives a trigger from the base station. In this case, the signal transmitted to the base station includes information of a type such as a request from the int. UE. The information of a type such as a request may be information (for example, a transmission resource request) related to a transmission request from the int. UE to the A-IoT UE.

Note that step X may be performed at a plurality of timings. For example, the above-described 3f and 3d or 3e may be applied. In this case, the information included in the signal transmitted to the base station by the int. UE at each timing may be different for each timing. In a case where the above-described 3f and 3d are applied, the int. UE transmits a signal to the base station before the int. UE receives a trigger from the base station, and transmits a signal to the base station before the A-IoT UE receives information.

The timing of step X may be defined in advance in the specification, or may be configured or indicated by the base station. The indication of the timing of step X may be included in the trigger transmitted from the base station.

Note that the int. UE may indicate a capability indicating the timing at which the int. UE can perform the above-described step X of transmitting a signal to the base station. For example, the int. UE may indicate a capability indicating whether step X can be performed before step 2, whether step X can be performed after step 2, and whether step X can be performed before step 0. The base station may indicate the timing of step X to the int. UE based on the indicated capability.

The communication flow in the case of DT in Topology 2 has been described above. With this flow, the radio communication system of the A-IoT can operate appropriately. For example, in a case where communication is performed between the base station and the A-IoT UE via the int. UE as in Topology 2, an appropriate processing procedure corresponding to the flow of traffic of DT is applied, so that the A-IoT UE can acquire appropriate information from the base station or the int. UE and can perform a proper operation.

Note that, in the above-described example (for example, FIG. 10), the transmission from the base station to the int. UE, the transmission from the int. UE to the A-IoT UE, and the transmission from the int. UE to the base station are each performed once, but the present disclosure is not limited thereto. Hereinafter, variations related to the number of transmissions will be described.

FIG. 11 is a diagram illustrating a first variation of the case of DT in Topology 2. FIG. 11 illustrates a signal flow between the base station (gNB), the int. UE, and the A-IoT UE, similarly to FIG. 10. Note that, since it is a case of DT in Topology 2, there is information transmission to the A-IoT UE, but there is no information transmission from the A-IoT UE.

In FIG. 11, the transmission from the int. UE to the base station is performed once, whereas the transmission from the base station to the int. UE and the transmission from the int. UE to the A-IoT UE are each performed twice. For example, the first transmission from the base station to the int. UE includes a trigger (or an indication) for the first transmission from the int. UE to the A-IoT UE, and the second transmission from the base station to the int. UE includes a trigger (or an indication) for the second transmission from the int. UE to the A-IoT UE. In this case, the transmission from the int. UE to the base station may include a report indicating whether at least one or both of the two transmissions from the int. UE to the A-IoT UE have been completed or failed.

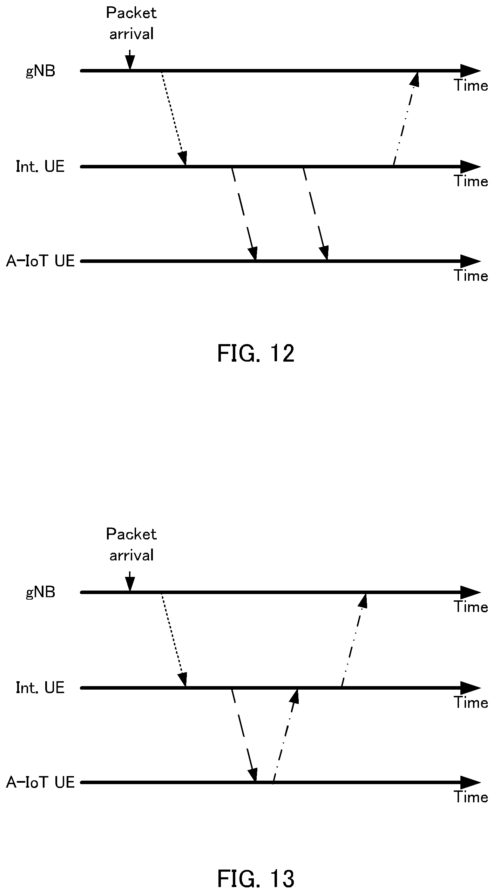

FIG. 12 is a diagram illustrating a second variation of the case of DT in Topology 2. FIG. 12 illustrates a signal flow between the base station (gNB), the int. UE, and the A-IoT UE, similarly to FIG. 10. Note that, since it is a case of DT in Topology 2, there is information transmission to the A-IoT UE, but there is no information transmission from the A-IoT UE.

In FIG. 12, the transmission from the int. UE to the base station and the transmission from the base station to the int. UE are performed once, whereas the transmission from the int. UE to the A-IoT UE is performed twice. For example, the transmission from the base station to the int. UE includes a trigger (or an indication) for the first transmission and a trigger (or an indication) for the second transmission from the int. UE to the A-IoT UE. In this case, the int. UE performs two transmissions from the int. UE to the A-IoT UE based on the triggers included in the transmission from the int. UE to the base station. In this case, the transmission from the int. UE to the base station may include a report indicating whether at least one or both of the two transmissions from the int. UE to the A-IoT UE have been completed or failed.

The present disclosure is not limited to the examples of FIGS. 11 and 12, and at least one of the transmission from the base station to the int. UE, the transmission from the int. UE to the A-IoT UE, and the transmission from the int. UE to the base station may be performed a plurality of times.

### <4. Case of DO-DTT in Topology 2>

FIG. 13 is a diagram illustrating an example of the case of DO-DTT in Topology 2. FIG. 11 illustrates a flow of signals between the base station (gNB), the int. UE, and the A-IoT UE. Note that, since it is the case of DO-DTT in Topology 2, there is information transmission to the A-IoT UE and information transmission from the A-IoT UE.

In the case of DO-DTT in Topology 2, the following five-step communication flow is assumed. Note that step 0 is started, for example, when a packet arrives at the base station.
· Step 0: The int. UE receives a trigger for transmitting a signal to the A-IoT UE from the base station and transmits the signal to the A-IoT UE based on the trigger. Step 0 includes an operation in which the base station transmits the trigger to the int. UE.
· Step 1: The A-IoT UE performs wake-up.
· Step 2: The A-IoT UE receives information from the int. UE. In other words, the int. UE transmits the information to the A-IoT UE.
· Step 3: The A-IoT UE transmits a signal to the base station. In other words, the base station receives the signal from the A-IoT UE.
· Step X: The int. UE transmits a signal to the base station.

Note that step 1 and step 2 may be performed together, for example, with the same signal. Further, the signal in step 2 may be a carrier waveform signal.

Note that, among the five steps, step 0 to step 3 may be performed in this order. Step X is not limited to an example performed after step 3. The timing at which step X is performed will be described later.

Note that step 0 may be performed without receiving a trigger for transmitting a signal to the A-IoT UE. For example, the int. UE transmits a signal to the A-IoT UE without receiving a trigger. For example, the int. UE transmits a signal to the A-IoT UE periodically or in a predetermined resource.

In step 1, the A-IoT UE may perform wake-up by a signal transmitted from the int. UE. The signal transmitted from the int. UE may be referred to as a carrier waveform. Here, the signal transmitted from the int. UE may correspond to an energy source that supplies energy to the A-IoT UE.

In addition, in step 1, the A-IoT UE may perform wake-up by a signal other than the carrier waveform signal (for example, a radio frequency signal (RF signal)) transmitted from the int. UE. Here, the signal other than the carrier waveform signal transmitted from the int. UE may correspond to an energy source that supplies energy to the A-IoT UE. Alternatively, in step 1, the A-IoT UE may perform wake-up by a signal (for example, a radio frequency signal (RF signal)) transmitted from a source other than the int. UE. Here, the signal transmitted from a source other than the int. UE may correspond to an energy source that supplies energy to the A-IoT UE.

In step 1, the signal received by the A-IoT UE may be an example of a signal requesting wake-up.

In step 1 and step 2 described above, in a case where a signal is transmitted from the int. UE, the transmission method of the signal transmitted from the int. UE may be any of the following 4a to 4c.

(4a) The signal transmitted from the int. UE may be broadcast to any one or more A-IoT UEs. In this case, it is not necessary to distinguish whether the transmission from the int. UE is directed at a single UE or at a UE group including one or more UEs. That is, a certain A-IoT UE (for example, referred to as A-IoT UE#1) that has received the signal need not detect whether the received signal is addressed to the A-IoT UE#1 or a group to which the A-IoT UE#1 belongs.

(4b) The signal transmitted from the int. UE may be multicast to a group including one or more A-IoT UEs. In this case, a certain A-IoT UE (for example, referred to as A-IoT UE#1) detects whether the received signal is transmitted to the group to which the A-IoT UE#1 belongs. For example, the A-IoT UE#1 detects whether the signal is transmitted to the group to which the A-IoT UE#1 belongs based on information (for example, cyclic redundancy check (CRC)) included in the signal and/or resources (for example, at least one of time, frequency, and code) used for the signal.

(4c) The signal transmitted from the int. UE is unicast to a single A-IoT UE. In this case, a certain A-IoT UE (for example, referred to as A-IoT UE#1) detects whether the received signal is transmitted to the A-IoT UE#1. For example, the A-IoT UE#1 detects whether the signal is transmitted to the A-IoT UE#1 based on information (for example, cyclic redundancy check (CRC)) included in the signal and/or resources (for example, at least one of time, frequency, and code) used for the signal.

Note that the A-IoT UE may indicate a capability indicating whether to support reception for at least one of the transmissions of 4a to 4c described above.

Note that the A-IoT UE may notify a capability indicating whether to support reception for at least one of the transmissions of 4a to 4c described above.

Note that, in the above-described step 1 and step 2, the transmission method of the signal from the int. UE may be different. For example, in step 1, the signal for waking up the A-IoT UE may be broadcast to any one or more A-IoT UEs as in 4a, and in step 2, the signal for transmitting information to the A-IoT UE may be multicast as in 4b or unicast as in 4c.

Note that step 1 and step 2 described above may be temporally continuous, or an interval may be provided between step 1 and step 2. For example, a signal for wake-up and a signal including information to be transmitted to the A-IoT may be temporally continuous.

Note that the int. UE to which the A-IoT UE transmits the signal in step 3 (for example, the int. UE that receives the signal transmitted by the A-IoT UE) may be the same as or different from the int. UE that is the transmission source of the information transmitted to the A-IoT UE in step 2.

The timing at which step X is performed may be any of the following 4d to 4g.

(4d) Step X is performed before step 2. That is, the int. UE transmits a signal to the base station before the A-IoT UE receives information. In other words, the int. UE transmits a signal to the base station before the int. UE transmits information to the A-IoT UE. In this case, the signal transmitted to the base station may include a report indicating that the reception of the trigger has succeeded.

(4e) Step X is performed after step 2. That is, the int. UE transmits a signal to the base station after the A-IoT UE receives information. In other words, the int. UE transmits a signal to the base station after the int. UE transmits information to the A-IoT UE. In this case, the signal transmitted to the base station includes a report indicating whether the transmission to the A-IoT UE has been completed or has failed. Note that, here, whether the transmission to the A-IoT UE has been completed or has failed may correspond to whether the int. UE has been able to perform the transmission or has not been able to perform the transmission. Note that, in this case, the signal transmitted to the base station may include a report indicating that the reception of the trigger has succeeded.

(4f) Step X is performed after step 3. That is, the int. UE transmits a signal to the base station after the A-IoT UE transmits information. In other words, the int. UE transmits a signal to the base station after the int. UE receives the information from the A-IoT UE. In this case, the signal transmitted to the base station may include a report indicating whether the transmission to the A-IoT UE has been completed or has failed, and/or a report indicating whether the reception from the A-IoT UE has been completed or has failed. Further, in this case, the signal transmitted to the base station may include a report indicating that the reception of the trigger has succeeded.

(4g) Step X is performed before step 0. That is, the int. UE transmits a signal to the base station before the int. UE receives a trigger from the base station. In this case, the signal transmitted to the base station includes information of a type such as a request from the int. UE. The information of a type such as a request may be information (for example, a transmission resource request) related to a transmission request from the int. UE to the A-IoT UE.

Note that step X may be performed at a plurality of timings. For example, the above-described 4g and at least one of 4d, 4e, and 4f may be applied. In this case, the information included in the signal transmitted to the base station by the int. UE at each timing may be different for each timing. In a case where the above-described 4g and 4d are applied, the int. UE transmits a signal to the base station before the int. UE receives a trigger from the base station, and transmits a signal to the base station before the A-IoT UE receives information.

The timing of step X may be defined in advance in the specification, or may be configured or indicated by the base station. The indication of the timing of step X may be included in the trigger transmitted from the base station.

Note that the int. UE may indicate a capability indicating the timing at which the int. UE can perform the above-described step X of transmitting a signal to the base station. For example, the int. UE may indicate a capability indicating whether step X can be performed before step 2, whether step X can be performed after step 2, and whether step X can be performed before step 0. The base station may indicate the timing of step X to the int. UE based on the indicated capability.

In step 3 described above, the signal transmission method in a case where a signal is transmitted from the A-IoT UE to the int. UE may be either of the following 4h and 4k.

(4h) The transmission in step 3 may be a backscattering UL transmission. In this case, timing adjustment (for example, timing advance) between DL reception and UL transmission may or may not be applied. Further, power adjustment (for example, a power amplifier) may or may not be applied. Further, transmission timing adjustment may or may not be applied.

(4k) The transmission in step 3 may be a UL transmission that is not backscattering. The UL transmission that is not backscattering may be a general UL transmission. For example, a UL channel (for example, PUCCH, PUSCH, PRACH, and the like) and/or a UL reference signal (for example, a sounding reference signal (SRS), a sequence-based signal, and the like) is generated and transmitted. In this case, timing adjustment between DL reception and UL transmission may or may not be applied. Further, power adjustment may be applied.

The communication flow in the case of DO-DTT in Topology 2 has been described above. With this flow, the radio communication system of the A-IoT can operate appropriately. For example, in a case where communication is performed between the base station and the A-IoT UE via the int. UE as in Topology 2, an appropriate processing procedure corresponding to the flow of the traffic of the DO-DTT is applied, so that the A-IoT UE can acquire appropriate information from the base station or the int. UE and can perform a proper operation. Further, in a case where the A-IoT UE transmits information as in DO-DTT, the A-IoT UE can transmit the information appropriately.

In the above-described example (for example, FIG. 13), the transmission from the base station to the int. UE, the transmission from the int. UE to the A-IoT UE, the transmission from the A-IoT UE to the int. UE, and the transmission from the int. UE to the base station are each performed once, but the present disclosure is not limited thereto. The number of times of these transmissions may be different from each other. For example, as in the example of FIG. 11, the transmission from the base station to the int. UE and the transmission from the int. UE to the A-IoT UE may be performed a plurality of times, or as in the example of FIG. 12, the transmission from the int. UE to the A-IoT UE may be performed a plurality of times. Alternatively, at least one of the transmission from the A-IoT UE to the int. UE and the transmission from the int. UE to the base station may be performed a plurality of times.

### <Variations>

The A-IoT UE determines which of Topology 1 and Topology 2 is applied based on information (for example, CRC or the like) included in a signal from the base station and/or the int. UE and/or resources (for example, at least one of time, frequency, and code) used for the signal from the base station and/or the int. UE.

The int. UE determines which of Topology 1 and Topology 2 is applied based on information (for example, CRC or the like) included in a signal from the base station and/or resources (for example, at least one of time, frequency, and code) used for the signal from the base station.

The A-IoT UE determines which of DT and DO-DTT is applied based on information (for example, CRC or the like) included in a signal from the base station and/or the int. UE and/or resources (for example, at least one of time, frequency, and code) used for the signal from the base station and/or the int. UE.

The int. UE determines which of DT and DO-DTT is applied based on information (for example, CRC or the like) included in a signal from the base station and/or resources (for example, at least one of time, frequency, and code) used for the signal from the base station.

In the above-described embodiment, the "wake-up" may mean preparation for reception of a signal from the base station and/or the int. UE, or may mean starting monitoring of a signal from the base station and/or the int. UE.

In the above-described embodiment, the A-IoT UE may hold or report a capability indicating at least one of whether Topology 1 is applicable, whether Topology 2 is applicable, whether DT is applicable, or whether DO-DTT is applicable. The report destination may be the base station or the int. UE.

In addition, in the above-described embodiment, the int. UE may hold or report a capability indicating at least one of whether DT is applicable and whether DO-DTT is applicable. The report destination may be the base station or the int. UE.

Next, the configurations of base station 10 and device 20 will be described. Note that the configurations of base station 10 and device 20 described below show examples of functions related to the present embodiment. Base station 10 and device 20 may have functions not illustrated in the drawings. In addition, the function classification and/or the name of the functional unit are not limited as long as the function of executing the operation according to the present embodiment is provided.

### <Configuration of Base Station>

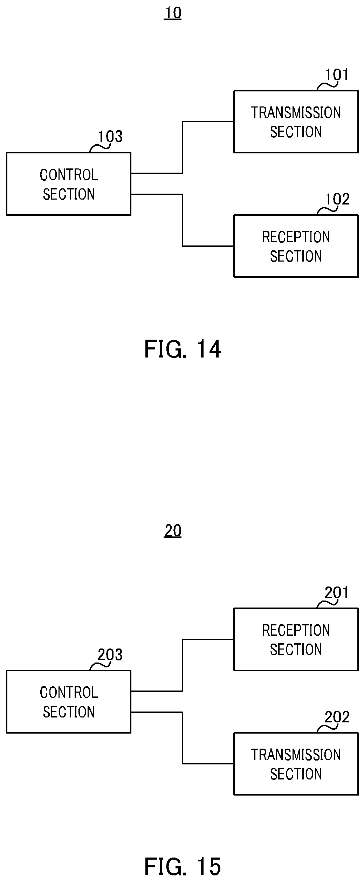

FIG. 14 is a block diagram illustrating an example of a configuration of base station 10 according to the embodiment. Base station 10 includes, for example, transmission section 101, reception section 102, and control section 103. Base station 10 communicates with device 20 (see FIG. 15) by radio. Base station 10 may be an intermediate node, an assisting node, or a terminal (a terminal of SL that communicates with device 20).

Transmission section 101 transmits a downlink (DL) signal to device 20. For example, transmission section 101 transmits the DL signal under the control of control section 103.

The DL signal may include, for example, a downlink data signal and control information (for example, downlink control information (DCI)). In addition, the DL signal may include information (for example, a UL grant) indicating scheduling related to signal transmission of device 20. In addition, the DL signal may include control information of a higher layer (for example, control information of radio resource control (RRC)). In addition, the DL signal may include a reference signal.

Channels used for transmitting the DL signal includes, for example, a data channel and a control channel. For example, the data channel may include a physical downlink shared channel (PDSCH), and the control channel may include a physical downlink control channel (PDCCH). For example, base station 10 transmits control information to device 20 using the PDCCH and transmits a downlink data signal using the PDSCH.

The reference signal included in the DL signal may include, for example, at least one of a demodulation reference signal (DMRS), a phase tracking reference signal (PTRS), a channel state information-reference signal (CSI-RS), a sounding reference signal (SRS), and a positioning reference signal (PRS) for position information. For example, the reference signal such as the DMRS or the PTRS is used for demodulating the downlink data signal and is transmitted using the PDSCH.

Reception section 102 receives an uplink (UL) signal transmitted from device 20. For example, reception section 102 receives a UL signal under the control of control section 103.

Control section 103 controls a communication operation of base station 10, including transmission processing of transmission section 101 and reception processing of reception section 102. Control section 103 performs operations other than the transmission and reception described in the above embodiment (the operations may be performed by transmission section 101 and/or reception section 102).

For example, control section 103 acquires information such as data and control information from a higher layer, and outputs the information to transmission section 101. In addition, control section 103 outputs data and control information received from reception section 102 to the higher layer.

For example, control section 103 allocates a resource (or a channel) used for transmission and reception of the DL signal and/or a resource used for transmission and reception of the UL signal based on the signal (for example, data and control information) received from device 20 or the like and/or the data and control information acquired from the higher layer. The information on the allocated resource may be included in control information to be transmitted to device 20.

Here, transmission section 101 and reception section 102 (may be collectively referred to as a communication section) communicate with device 20.

Note that, in the case of Topology 2, an intermediate node (for example, the above-described int. UE, an example of a device) that performs relaying is present between base station 10 and device 20. In this case, transmission section 101 may transmit the DL signal to device 20 via the intermediate node, and reception section 102 may receive the UL signal from device 20 via the intermediate node. Further, in this case, transmission section 101 may transmit a trigger (or an indication) to the intermediate node, and reception section 102 may receive a signal (for example, a report) from the intermediate node.

For example, in the case of Topology 1, transmission section 101 may transmit a signal for performing wake-up to device 20. In the case of Topology 2, transmission section 101 may transmit a trigger to the intermediate node (for example, the above-described int. UE) between base station 10 and device 20.

Further, for example, in the case of DO-DTT of Topology 1, reception section 102 may receive a signal (or information) from device 20. In the case of Topology 2, reception section 102 may receive a signal (or information) from the intermediate node (for example, the above-described int. UE) between base station 10 and device 20.

### <Configuration of Device>

FIG. 15 is a block diagram illustrating an example of a configuration of device 20 according to the embodiment. Device 20 includes, for example, reception section 201, transmission section 202, and control section 203. Device 20 communicates with, for example, base station 10 by radio. Device 20 may be, for example, an A-IoT device or A-IoT UE.

Reception section 201 receives a DL signal transmitted from base station 10. For example, reception section 201 receives the DL signal under the control of control section 203.

Transmission section 202 transmits a UL signal to base station 10. For example, transmission section 202 transmits a UL signal under the control of control section 203.

The UL signal may include, for example, an uplink data signal and control information (for example, uplink control information (UCI)). For example, information on the processing capability of device 20 (for example, A-IoT capability) may be included. In addition, the UL signal may include a reference signal.

Channels used for transmitting the UL signal includes, for example, a data channel and a control channel. For example, the data channel may include a physical uplink shared channel (PUSCH), and the control channel may include a physical uplink control channel (PUCCH). For example, device 20 transmits control information using the PUCCH and transmits an uplink data signal using the PUSCH from base station 10.

The reference signal included in the UL signal may include, for example, at least one of a DMRS, a PTRS, a CSI-RS, an SRS, or a PRS. For example, a reference signal such as the DMRS or the PTRS is used for demodulating the uplink data signal and is transmitted using an uplink channel (for example, PUSCH).

Control section 203 controls a communication operation of device 20, including reception processing of reception section 201 and transmission processing of transmission section 202. Control section 203, for example, performs operations other than the transmission and reception described in the above embodiment (the operations may be performed by reception section 201 and/or transmission section 202).

For example, control section 203 acquires information such as data and control information from a higher layer, and outputs the information to transmission section 202. In addition, control section 203 outputs data and control information received from reception section 201 to the higher layer.

The channels used for the transmission of the DL signal and the channels used for the transmission of the UL signal are not limited to the above-described examples. For example, the channels used for transmitting the DL signal and the channels used for transmitting the UL signal may include a random access channel (RACH) and a physical broadcast channel (PBCH). The RACH may be used, for example, for transmitting DCI including a random access radio network temporary identifier (RA-RNTI).

Here, reception section 201 and transmission section 202 (may be collectively referred to as a communication section) communicate with a network such as base station 10. Note that transmission section 202 may not be included in device 20.

Note that, in the case of Topology 2, an intermediate node (for example, the above-described int. UE, an example of a device) that performs relaying is present between base station 10 and device 20. In this case, transmission section 202 may transmit the UL signal to base station 10 via the intermediate node, and reception section 201 may receive the DL signal from base station 10 via the intermediate node.

In the case of DT, transmission section 202 does not transmit a signal to base station 10 or the intermediate node. In this case, device 20 may not include transmission section 202.

In the case of DO-DTT in Topology 1, transmission section 202 may transmit a signal to base station 10. In the case of DO-DTT in Topology 2, transmission section 202 may transmit a signal to the intermediate node (for example, the above-described int. UE) between base station 10 and device 20.

For example, device 20 is a device having a lower complexity than a narrow band internet of things (NB-IoT) device, and reception section 201 receives a signal requesting wake-up. Control section 203 performs wake-up based on the received signal and controls reception of the first information in reception section 201.

For example, transmission section 202 of device 20 transmits the second information after reception section 201 receives the first information.

For example, reception section 201 receives the first information from the second device (for example, base station 10 or the intermediate node), and transmission section 202 transmits the second information to the third device (for example, base station 10 or the intermediate node).

### <Configuration of Intermediate Node>

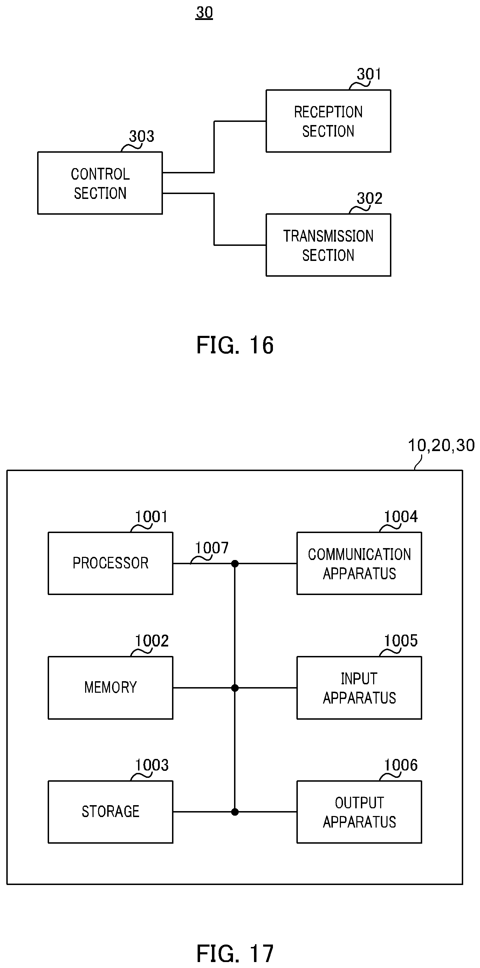

FIG. 16 is a block diagram illustrating an example of a configuration of intermediate node 30 according to the embodiment. Intermediate node 30 (for example, the above-described int.UE or an example of a device) relays between base station 10 and device 20 in Topology 2. Note that, in the case of Topology 1, intermediate node 30 may not be included in the radio communication system according to the present embodiment. Intermediate node 30 includes, for example, reception section 301, transmission section 302, and control section 303.

Reception section 301 receives a signal transmitted from base station 10. In the case of DO-DTT, reception section 301 receives a signal transmitted from device 20. For example, reception section 301 receives the signal under the control of control section 303.

Transmission section 302 transmits a signal to base station 10. In addition, transmission section 302 transmits a signal to device 20. For example, transmission section 302 transmits the signal under the control of control section 303.

Control section 303 controls the communication operation of intermediate node 30, including the reception processing in reception section 301 and the transmission processing in transmission section 302. Control section 303, for example, performs operations other than the transmission and reception described in the above embodiment (the operations may be performed by reception section 301 and/or transmission section 302).

In the above description, the terms DL and UL are examples, and the present disclosure is not limited thereto. The transmission from intermediate node 30 to base station 10 may or may not be referred to as UL transmission. The transmission from base station 10 to intermediate node 30 may or may not be referred to as DL transmission. The transmission from intermediate node 30 to device 20 may or may not be referred to as DL transmission. The transmission from device 20 to intermediate node 30 may or may not be referred to as UL transmission.

The present disclosure has been described, thus far. Note that the classification of items in the above description is not essential to the present disclosure, and matters described in two or more items may be used in combination as necessary, and a matter described in an item may be applied to a matter described in another item (unless inconsistent).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, a base station, a device, and so on according to one embodiment of the present disclosure may function as a computer that performs the processes of the radio communication method of the present disclosure. FIG. 17 is a diagram to show an example of a hardware structure of a base station, a device, and an intermediate node according to the embodiment. Physically, the above-described base station 10, device 20, and the intermediate node may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 10, device 20, and intermediate node 30 may be configured to include one or more of apparatuses illustrated in the drawings, or may be configured not to include part of apparatuses.

Each function of base station 10, device 20, and intermediate node 30 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, control section 303, and so on may be implemented by processor 1001.

Furthermore, processor 1001 reads programs (program codes), software modules, data, and so on from at least one of storage 1003 and communication apparatus 1004, into memory 1002, and performs various processes according to these. As for the programs, programs to allow computers to perform at least part of the operations of the above-described embodiments are used. For example, control section 103 of base station 10, control section 203 of device 20, and control section 303 of intermediate node 30 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, reception section 301, transmission section 302, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch screen).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 10, device 20, and intermediate node 30 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, indication of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination may be realized by a value (0 or 1) represented by one bit, by a boolean value (true or false), or by comparison of numerical values (e.g., comparison with a predetermined values).

### <Variations and the like of Aspects>

Each aspect/embodiment described in the present disclosure may be used independently, may be used in combination, or may be used by switching according to operations. Further, indication (transmission/reporting) of predetermined information (e.g., indication (transmission/reporting) of "X") is not limited to an explicit indication (transmission/reporting), and may be performed by an implicit indication (transmission/reporting) (e.g., by not performing indication (transmission/reporting) of the predetermined information).

As described above, the present invention has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, device 20 may have the functions of base station 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 10 may have the functions of device 20 described above.

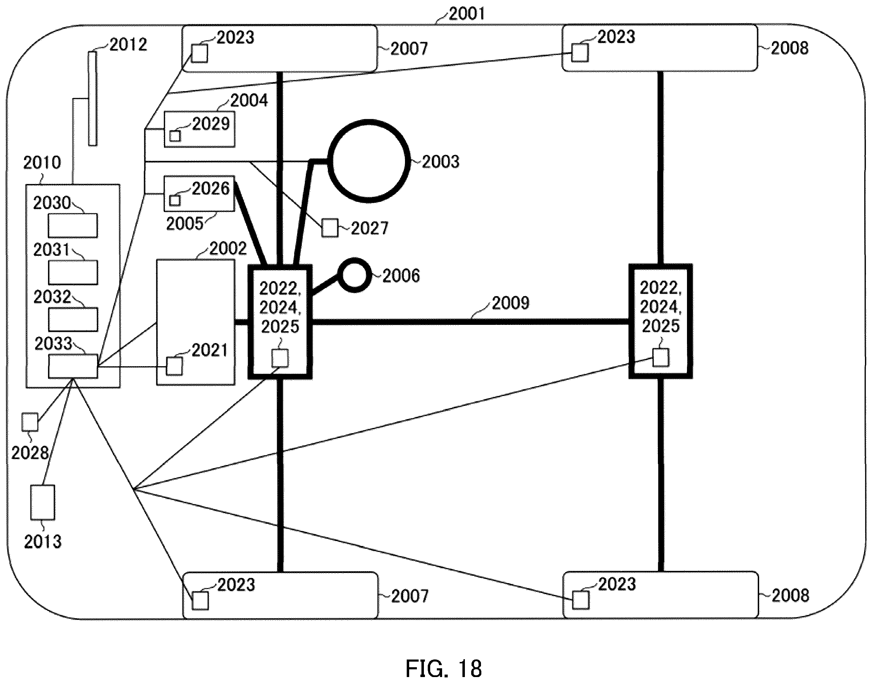

FIG. 18 illustrates an example of a configuration of vehicle 2001. As illustrated in FIG. 18, vehicle 2001 includes drive section 2002, steering section 2003, accelerator pedal 2004, brake pedal 2005, shift lever 2006, front wheel 2007, rear wheel 2008, axle 2009, electronic control section 2010, various sensors 2021 to 2029, information service section 2012, and communication module 2013. The aspects/embodiments described in the present disclosure may be applied to a communication device mounted in vehicle 2001, and may be applied to, for example, communication module 2013.

Drive section 2002 may include, for example, an engine, a motor, and a hybrid of an engine and a motor. Steering section 2003 includes at least a steering wheel and is configured to steer at least one of the front wheel or the rear wheel, based on the operation of the steering wheel operated by the user.

Electronic control section 2010 includes microprocessor 2031, memory (ROM, RAM) 2032, and communication port (IO port) 2033. Electronic control section 2010 receives signals from the various sensors 2021 to 2029 provided in vehicle 2001. Electronic control section 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

Information service section 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system section 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive section 2002, steering section 2003, accelerator pedal 2004, brake pedal 2005, shift lever 2006, front wheel 2007, rear wheel 2008, axle 2009, microprocessor 2031 and memory (ROM, RAM) 2032 in electronic control section 2010, and sensors 2021 to 29 provided in vehicle 2001.

Communication module 2013 is a communication device that can be controlled by microprocessor 2031 of electronic control section 2010 and that is capable of communicating with external devices. For example, various kinds of information are transmitted to and received from external devices through radio communication. Communication module 2013 may be internal to or external to electronic control section 2010. The external devices may include, for example, a base station, a mobile station, or the like.

Communication module 2013 may transmit at least one of signals from various sensors 2021 to 2029 described above input to electronic control section 2010, information obtained based on the signals, and information based on an input from the outside (a user) obtained via information service section 2012, to the external apparatus via radio communication. Electronic control section 2010, various sensors 2021 to 2029, information service section 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service section 2012 provided in vehicle 2001. Information service section 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive section 2002, steering section 2003, accelerator pedal 2004, brake pedal 2005, shift lever 2006, front wheel 2007, rear wheel 2008, axle 2009, and sensors 2021 to 2029 mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

The above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Base station
20 Device
30 Intermediate node
101, 202, 302 Transmission section
102, 201, 301 Reception section
103, 203, 303 Control section

## Claims

1. A first device that has a lower complexity than a narrow band internet of things (NB-IoT) device, the first device comprising:
a reception section that receives a signal requesting wake-up; and
a control section that performs the wake-up based on the signal and controls reception of first information in the reception section.

2. The first device according to claim 1, further comprising:
a transmission section that transmits second information after the reception of the first information.

3. The first device according to claim 2, wherein,
the reception section receives the first information from a second device, and
the transmission section transmits the second information to a third device.

4. The first device according to claim 3, wherein,
the second device is a base station or an intermediate device that relays communication between the base station and the first device.

5. A radio communication system, comprising:
a first device that receives a signal requesting wake-up, performs the wake-up based on the radio signal, and controls reception of first information; and
a second device that transmits the signal to the first device and transmits the first information to the first device.

6. A communication method, comprising:
receiving, by a device, a signal requesting wake-up,
performing, by the device, the wake-up based on the signal and controlling, by the device, reception of first information.
